(19) Europäisches Patentamt
European Patent Office
Office européen des brevets

(11) **EP 4 048 052 B1**

(12) **EUROPEAN PATENT SPECIFICATION**

(45) Date of publication and mention of the grant of the patent:
**17.07.2024 Bulletin 2024/29**

(21) Application number: **20793704.6**

(22) Date of filing: **22.10.2020**

(51) International Patent Classification (IPC):
*A01C 21/00* (2006.01)   *C05B 1/00* (2006.01)
*C05D 5/00* (2006.01)   *C05D 3/02* (2006.01)

(52) Cooperative Patent Classification (CPC):
(C-Sets available)
**C05D 3/02; C05D 5/00;** A01C 21/007; Y02A 40/10

(Cont.)

(86) International application number:
**PCT/EP2020/079789**

(87) International publication number:
**WO 2021/078879 (29.04.2021 Gazette 2021/17)**

(54) **USE OF COMPACTED CALCIUM-BASED GRANULES FOR SOIL CONDITIONING IN AGRICULTURE**

VERWENDUNG VON KOMPAKTIERTEN GRANULATEN AUF CALCIUMBASIS ZUR BODENKONDITIONIERUNG IN DER LANDWIRTSCHAFT

UTILISATION DE GRANULES COMPACTÉS À BASE DE CALCIUM POUR L'AMENDEMENT DU SOL DANS L'AGRICULTURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA**

(30) Priority: **23.10.2019 EP 19204872**

(43) Date of publication of application:
**31.08.2022 Bulletin 2022/35**

(73) Proprietor: **Carmeuse Research and Technology 1348 Louvain-La-Neuve (BE)**

(72) Inventors:
• **PONCHON, François
1180 UCCLE (BE)**
• **LEONARD, Géraldine
5081 BOVESSE (BE)**

(74) Representative: **AWA Benelux
Parc d'affaires Zénobe Gramme - Bât. K
Square des Conduites d'Eau 1-2
4020 Liège (BE)**

(56) References cited:
**US-A1- 2016 207 843    US-A1- 2018 179 117**

• **UNKNOWN: "PRODUCT SPECIFICATION GRANULAR POLYSULPHATE - EC FERTILISER", 31 October 2018 (2018-10-31), pages 1 - 1, XP093052088, Retrieved from the Internet <URL:https://maguirehq.com/assets/products/granular-polysulphate1679579595_Bb6.pdf> [retrieved on 20230606]**

(52) Cooperative Patent Classification (CPC): (Cont.)

C-Sets
**C05D 3/02, C05D 5/00**

## Description

### Field of the invention

The present invention is related to the use of compacted calcium-based granules in agriculture, in particular in precision farming. In particular, the granules, preferably spheroidal/lens-shaped pellets, are used as a soil liming compound, for example to deacidify the soil. The pellets exhibit specific chemical and physical properties and comprise a source of calcium and/or a source of magnesium, and optionally one or more additives. The present invention is further related to a precision farming method comprising the step of dispersion of the compacted calcium-based pellets to the field.

### State of the art

The use of calcium-based compounds, particularly quicklime and dolomitic lime, is known as soil treatment, such as soil stabilization, soil liming and agriculture in general.

In agriculture, such as in precision farming, the calcium-based compounds are used as soil conditioner, or so-called soil liming agent or soil liming compound, to neutralize acidity from the soil. The soil may be of acidic nature, having a pH value lower than 6 or even lower than 5. Its proper composition and/or properties and/or the plants and crops and/or any nutrients and/or fertilizers distributed to the soil influence the soil's pH value. However, for optimal growth of plants and/or crops, a specific pH value is preferred depending on the plants, crops and the fertilizers and/or nutrients distributed onto the soil. Applying lime to the soil (soil liming) allows to increase its pH and provides better soils properties for a better fertility. Soil liming improves the soil's chemical properties to prevent the soil from toxicity and to obtain a more efficient uptake of major nutrients and/or fertilizers by the plants and crops. Soil liming improves the physical properties of the soil which allows a better water and air circulation and facilitates rooting and emergence. Soil liming also improves the biological properties contributing to plant nutrition and organic matter stability. The degree to which the liming product may increase the pH value is expressed by the neutralization value. The neutralizing value is a figure representing the amount of CaO equivalent in 100 g of product having the same neutralization capacity. It can be determined by analysis according to standard EN 12945.

Another important aspect in soil liming is the speed of action, so called reactivity. Reactivity of carbonate-based products, such as limestone, is closely influenced by the size but remains slow and largely dependent on soils conditions. Reactivity of oxide-based products, such as lime, is much higher due to their chemical composition but more dependent on its capacity to react with water upon absorption of water and/or moisture, such as moisture from the atmosphere, followed by decomposition into smaller particles. Proper dispersion of the particles is enhancing the reaction of the liming product within the soil. Calcium-based products with a high neutralizing value, good reactivity and a good dispersibility in water are known as good liming soil conditioners.

The quantity of soil liming product, i.e. calcium-based product such as pellets, to be applied to the soil can be derived from a combination of at one hand the properties of the soil liming product and at the other hand the difference between the soil's actual composition and the level of soil acidity and the soil's targeted composition and the targeted level of soil acidity. The actual condition of the soil is derived from measuring the soil composition and/or its properties, and the level of soil acidity.

The level of soil acidity can be measured for example by measuring the pH value in water or in a chloride salt solution in order to extract the full exchangeable acidity. Various of models and formulae have been established depending on regional references to calculate precisely the quantity of soil liming product to be applied per unit of surface on a given field area onto which the analysis has been performed. Such models and formulae are known in the art of soil conditioning, in particular in the field of soil liming.

Precision farming is a technology having high potential and being used more frequently. In precision farming, the elevated level of precision of the analysis of the soil, including measurement of the soil composition and/or properties, and the level of soil acidity, in function of the position on the field allows to apply optimized quantities of soil conditioner at each position on the field. The mean challenges are the mapping of the field, and the precise distribution of soil conditioners at each position of the field.

The articles 'Precision lime making a difference' (source: Eilish Burke Teagasc tillage advisor "Precision lime making a difference" Vol 24, Today's Farm, September-October 2017) and 'A comparison of conventional and sensor-based lime requirement maps' (source: Jonjak, A.KAdamchuk, V.IWortmann, C.SShapiro, C.A "Spatial Variability in Crop, Soil and Natural Resources", Oral, 2010) explain methods of field mapping in precision farming. Article 'The profitability of variable rate lime in wheat' (source: B. E. Mills, B. Wade Brorsen, and D. B. Arnall, "The profitability of variable rate lime in wheat," Precis. Agric., Jun. 2019.) explains the advantages of precision farming for the growing of wheat.

US 2003/0097863 (Magic Green Corporation - 1995) discloses an agglomerate for use as a soil conditioner, in particular a liming agent, being formed by pelletizing (wet granulation) a pre-agglomerate, comprising about 15% to about 60% by weight of a particulate calcium source and about 30% to about 80% by weight of a primary plant nutrient source.

WO 2017/163246 (Dead Sea Works Ltd - 2016) discloses a spherical fertilizer granule having less than 3% porosity, and a process for the production by compacting a fertilizer dust, wherein more than 20% of the particles of said dust have a size of less than 150 μm at a temperature of 25-200 degrees Celsius and soft crushing the compacted material into granules.

US2016/207843 (Omya International AG - 2013) discloses a method for regulating the pH of a soil by means of the use of at least one earth alkali carbonate-containing material having a D50 value of 0.1 - 50 μm, a D98 value of 75 μm or less and a density between 2.5 and 3.5 g/cm$^3$. The document further discloses the use of an irrigation or spraying system for the application of an aqueous suspension comprising the at least one earth alkali carbonate-containing material to optimize or improve the pH of the soil.

A first problem encountered with the products of the prior art is that the products have suboptimal dimensions for precision farming. Too small, powder-like or dust-like particles may stick together, and may cause clogging and blockage of the equipment used to store, handle, transport, distribute or disperse the calcium-based products. Too large dimensions may, for many applications, lead to products that cannot be handled by the existing equipment, i.e. they are too large to exit the equipment or generate a low reaction control not allowing an accurate dosage. There is an optimal dimension of the products for precision farming, allowing accurate dosage, avoiding clogging and blockage of equipment and dust formation on the field, and allowing a dispersion on the field in a homogeneous and precise way.

A second problem encountered with the products already available is that products having dimensions that allow handling often have insufficient mechanical properties, such as crush-resistance or resistance against rupture upon load crushing or compression, which may lead to fragmentation and powder formation upon handling of the product (i.e. storage, transportation, distribution, and dispersion), hence, reducing the level of precision of dosage per unit of surface. Large quantities of expensive additives are used during manufacturing to enhance the mechanical properties, but they remain often suboptimal. Existing products with sufficient mechanical strength, made without the use of expensive additives, are tablets and briquettes, which for precision farming are too large to be used. Further, existing processes to reduce their dimensions into usable dimensions have shown to reduce the mechanical strength to suboptimal values.

A third problem with the products of the prior art is that most products contain water-based additives, for example as a binder, which favors the formation of $Ca(OH)_2$ due to reaction between the calcium-source and the water contained in the additives. In most applications, $Ca(OH)_2$ is less concentrated in equivalent CaO compared to its dry form, CaO.

A further problem is that the prior art products have a large degree of porosity. A large degree of porosity may be obtained with manufacturing processes of the prior art that start from CaO that is hydrated with water to obtain hydrated lime, which is shaped into granules and is subsequently dehydrated, giving CaO pellets with a high porosity and low mechanical resistance.

## Aims of the invention

The present invention is related to the use of compacted calcium-based granules, in particular pellets, in agriculture, in particular in precision farming. The pellets are used as soil conditioning product, in particular as soil liming product, such as for deacidifying of the soil. The pellets are in particular spheroidal/lens-shaped pellets that are crush-resistant, have an average size lower than 10 mm, as measured by means of sieve analysis, and a granule density of at least 1.6 g/cm$^3$, and wherein the pellets comprise at least one calcium source and/or at least one magnesium source.

The present invention is further related to a precision farming method for the compacted spheroidal/lens-shaped pellets of the present invention, comprising measuring the soil composition and/or properties, and the level of soil acidity, mapping the measured values in a database, determining the difference between the measured values and the targeted values, determining the dispersion profile of the compacted spheroidal/lens-shaped pellets, and dispersing the compacted spheroidal/lens-shaped pellets to the soil according to the determined dispersion profile.

## Summary of the invention

The present invention discloses the use of compacted spheroidal/lens-shaped pellets in precision farming, the pellets comprising a calcium source and/or a magnesium source, the calcium source comprising at least CaO, the magnesium source comprising at least MgO, wherein the pellets comprise at least 60 wt%, preferably 70 wt% of said CaO and/or said MgO, based on the total weight of the pellets, wherein the pellets have:

- an average size lower than 10 mm, measured by sieve analysis, and
- a granule density equal to or higher than 1.60 g/cm$^3$, preferably equal to or higher than 1.70 g/cm$^3$, measured by mercury picnometry.

According to specific embodiments, the pellets used in the present invention for precision farming may further have one or a combination of the following properties:

- a particle size distribution (PSD) after tablet breaking and prior to screening, having a D10/D90 ratio equal to or higher than 0.60; the D10 value and the D90 value being calculated from the particle size distribution measured by sieve analysis,
- a mercury porosity equal to or lower than 0.3 $cm^3$/g, preferably equal to or lower than 0.2 $cm^3$/g, measured by mercury intrusion on pores with a diameter larger than 7.5 nm,
- a load until rupture of at least 40 N, preferably at least 75 N, measured by compression testing until rupture,
- a neutralization value of at least 70 equivalent CaO according to EN12945, preferably at least 75 equivalent CaO, 80 equivalent CaO, 85 equivalent CaO, 90 equivalent CaO, or 95 equivalent CaO, and
- a dispersibility of at least 70% at 315 $\mu$m in water according to the method defined in EN15704.

Preferably, the pellets are a soil liming compound.

The present invention further discloses a precision farming method comprising the steps of:

- measuring the soil composition and the level of soil acidity,
- mapping the measured values in a database,
- determining the difference between the measured values and the targeted values in relation to the plants and crops and/or any nutrients and/or any fertilizers that will be dispersed to the soil,
- determining a dispersion profile of the compacted spheroidal/lens-shaped pellets of the invention to be dispersed to each position, and
- dispersing the compacted spheroidal/lens-shaped pellets of the invention to the soil according to the determined dispersion profile.

Preferably, the dispersion step is conducted via a distribution disk of a distribution equipment rotating at a rotational speed between 600 rpm and 1000 rpm.

Preferably, the compacted spheroidal/lens-shaped pellets are dispersed to the soil in a triangular dispersion profile linearly increasing up to a projection distance of half of the maximal projection distance, and then linearly decreasing until the maximal projection distance is reached, and wherein the coefficient of variation for a predetermined projection distance, measured according to NBN EN 13739-1:2011 and NBN EN 13739-2:2011, is equal to or less than 15%, preferably equal to or less than 10%.

## Short description of the drawings

Fig. 1 shows the cumulative particle size distribution (PSD) in graphical form for the examples according to the invention and two comparative samples.

Fig. 2A and 2B show an example of a 3D-representation of the results of a dispersion test of pellets to a field.

Fig. 3 shows the projection angle distribution for several samples.

Fig. 4A and 4B show the projection distance distribution for several samples at different rotation speeds of the distribution disk for projecting the pellets.

Fig. 5 shows the average projection distance for several samples at different rotation speeds of the distribution disk for projecting the pellets.

Fig. 6 shows the set-up of a dispersion test in real conditions on the field.

## Detailed description of the invention

The pellets used in precision farming according to the invention comprise at least a calcium source and/or a magnesium source. The calcium/magnesium source may be a powder comprising particles having a D95 value of the particle size distribution (PSD) equal to or lower than the desired size of the resulting pellet, such as a D95 value equal to or lower than 50% of the desired D50 value of the pellets, wherein the particle size is measured by sieve analysis. For example, for compacted pellets having an average size of 4 mm (or D50 value), the calcium/magnesium source preferably is a powder comprising particles having a D95 value lower than 2 mm.

The D50 value and the D95 value of a compound comprising particle are calculated from the particle size distribution for that compound, e.g. the pellets or the powder, and in particular from the cumulative particle size distribution for that compound comprising particles. The D50, resp. D95 value is the size of the particles of the compound - i.e.

pellets or powder comprising particles - for which 50%, resp. 95% of the compound's particles have a size equal to or lower than the D50, resp. D95 value. Other Dx values are calculated in the same way, wherein x is a value between 0 and 100, meaning that for a given Dx value x% of the particles (pellets, granules, powder particles) have a size equal to or lower than the Dx value.

For example, for particles or pellets having an average size (i.e. D50 value of the particle size distribution (PSD)) of 4 mm, a D10 value of 1 mm and a D90 value of 10 mm, this means that 10% of the particles or pellets have a size equal to or lower than 1 mm and 90% of the particles or pellets have a size equal to or lower than 10 mm. This means that 80% of the particles or pellets have a size higher than 1 mm and equal to or lower than 10 mm. The D10/D90 ratio is 0.10. The particle size distribution is in the light of the present invention considered as a wide particle size distribution.

For example, for particles or pellets having an average size (i.e. D50 value of the particle size distribution (PSD)) of 4 mm, a D10 value of 3.6 mm and a D90 value of 4.8 mm, this means that 10% of the particles or pellets have a size equal to or lower than 3.6 mm and 90% of the particles or pellets have a size equal to or lower than 4.8 mm. This means that 80% of the particles or pellets have a size higher than 3.6 mm and equal to or lower than 4.8 mm. The D10/D90 ratio is 0.75. The particle size distribution is in the light of the present invention considered as a narrow particle size distribution.

Preferably, the calcium source comprises calcium oxide (CaO) as main component. The calcium source may further comprise calcium carbonate ($CaCO_3$) and/or calcium hydroxide ($Ca(OH)_2$). The calcium source may further comprise dolime (CaO.MgO) and/or dolomite ($CaMg(CO3)_2$).

Preferably, the magnesium source comprises MgO as main component. The magnesium source may further comprise $MgCO_3$ and/or $Mg(OH)_2$.

The pellets used in precision farming according to the invention comprise at least 60 wt% of CaO and/or MgO, based on the total weight of the pellets. The pellets may comprise at least 65 wt% CaO and/or MgO, such as at least 70 wt%, 75 wt%, 80 wt%, 85 wt% or 90 wt% CaO and MgO. With "at least 60 wt% of CaO and/or MgO" it is meant in the light of the present invention "60 wt% CaO" or "60 wt% CaO *and MgO*", wherein the weight of *CaO and MgO* is to be understood as the sum of the weight (or weight fraction) of CaO, the weight (or weight fraction) of MgO, and, when present, the weight (or weight fraction) of CaO.MgO.

The compacted spheroidal/lens-shaped pellets may further comprise one or more additives, such as a fertilizer, a nutrient, a lubricating agent and/or a binding agent. Said nutrient may be a micronutrient. Said fertilizer may be, without being limited thereto, ammonium nitrate ($NH_4NO_3$), urea. Said nutrient may be, without being limited thereto, potassium chloride (KCl). The binding or lubricating agent may be, without being limited thereto, PEG, calcium stearate ($C_{36}H_{70}CaO_4$), magnesium stearate ($C_{36}H_{70}MgO_4$), $NaNO_3$, or a lignosulfonate, such as calcium lignosulfonate ($C_{20}H_{24}CaO_{10}S_2$). Preferably, the optional additive is free of water.

The particle size distribution (PSD) is measured by means of sieve analysis. Sieve analysis is an analysis technique known in the field, and uses sieves with different mesh sizes to determine the weight fraction (in wt%) of the initial weight of the test sample that is passing the sieve with a given mesh size. Preferably, the sieving is performed by means of vibrating sieves, wherein the sieve vibrating is controlled by the equipment used. Alternatively, the sieving may be performed manually. Components of the test sample that pass a sieve with a certain mesh size have at least one dimension that is smaller than the mesh size of that particular sieve. The mesh sizes used in the sieve analysis will depend on the expected dimensions of the particles under investigation. It may be preferred to perform a first sieve analysis with a wide range of mesh sizes, for example going from 50 $\mu$m to 15 mm, to have an idea of the particle size range. A second sieve analysis may be carried out with sieves having a mesh size around the particle size range obtained in the first sieve analysis, to obtain a more detailed particle size distribution. The standard measurement procedure starts with the sieve with the largest mesh size and ends with the sieve with the smallest mesh size.

Preferably, the pellets have a D10/D90 ratio equal to or higher than 0.60, for example equal to or higher than 0.65, 0.70 or 0.75.

The compacted spheroidal/lens-shaped pellets may have a shape ratio equal to or higher than 0.56, such as equal to or higher than 0.58, 0.60, 0.62 or 0.65. The shape ratio is in the light of the present invention defined as the ratio of the minimum dimension (preferably the thickness) to the maximum dimension (preferably the length) of a same pellet.

The density of granules can be defined in different ways. The bulk density is the density calculated from the weight of pellets that fills a given volume, for example 300 cm$^3$. The bulk density is measured according to ASTM D5004, performing the measurement three times and calculating the average bulk density. The bulk density takes into account the interstices between the pellets in said volume filled with pellets, the volume of solid material of the pellets and the volume of the closed and open pores of the pellet. For example, when a volume of 300 cm$^3$ is filled with 600 g of pellets, the bulk density is 2 g/cm$^3$.

The granule density, also called the apparent particle density, is the mass of a particle or pellet divided by its apparent pellet or granule volume, i.e. the volume calculated from the outer dimensions of the pellet. The granule density takes into account the volume of solid material of the pellets and the volume of the closed and open pores of the pellet.

The granule density is measured with a mercury picnometer. The granule density by means of mercury picnometry is measured on 0.3 g pellets according to the following procedure (source: catalogue of PMI - Porous Material Inc., and 'Improved mercury picnometry for measuring accurate volumes of solid materials', by S Yamagishi and Y Takahashi, published on IOPScience website):

- sample cell is weighed,
- sample is placed in the sample cell, cell and sample are weighed together. This gives accurately the weight of the sample,
- mercury is added to the cell until saturation at atmospheric pressure,
- the cell including the sample and the mercury is weighed,
- the granule density of the sample is computed from the known weights, the volume of the cell, the volume of mercury in the cell with and without the sample being present, and the density of the mercury.

The measurement is performed 3 times, and the average granule density is calculated.

The skeletal density of a granule is defined as the mass of discrete pieces of solid material divided by the sum of the volume of the solid material and the closed pores. The skeletal density is measured according to ASTM D3766, and takes into account the volume of solid material of the pellets and the volume of the closed pores of the pellet.

The true density of a granule is defined as the mass of a pellet divided by the volume of solid material, excluding the volume of the open and the closed pores.

In the light of the present invention, the granule density or apparent particle density is preferred. Preferably, the compacted pellets have a granule density, measured by means of mercury picnometry, equal to or higher than 1.60 $g/cm^3$, such as equal to or higher than 1.70, 1.85, 2.00, 2.10, or 2.2 $g/cm^3$. It is to be understood that the maximal granule density of the pellet is the density of the raw material's skeleton for a pellet having no pores. For example, when pure CaO is used to produce the compacted spheroidal/lens-shaped pellets, the maximal granule density would be from 3.2 $g/cm^3$ to 3.3 $g/cm^3$.

The granule density is a measurement for the degree of porosity of a pellet. The higher the granule density, the more compact the pellet is and the lower the degree of total porosity. In the light of the present invention, pores in the pellets having an equivalent pore size lower than 2 nm are classified as micropores, while pores with an equivalent pore size higher than 50 nm are classified as macropores, and pores with an equivalent pore size equal to or lower than 50 nm and equal to or higher than 2 nm are classified as mesopores. This division into micropores, mesopores and macropores is common general knowledge (source: Reporting Physisorption Data for Gas/Solid Systems, with Special Reference to the Determination of Surface Area and Porosity, Pure & Appl. Chem., Vol. 57, No. 4, pp. 603-619, 1985).

Preferably, the pellets have a mercury porosity, measured on pores with a diameter larger than 7.5 nm, equal to or lower than 0.3 $cm^3/g$, such as equal to or lower than 0.28, 0.25, 0.22, 0.20, or 0.19 $cm^3/g$.

The mercury porosity is measured by mercury porosimetry, preferably mercury intrusion, and is expressed as the pore volume of the pellet that is filled with mercury during the test per gram of pellet ($V_{Hg}$ in $cm^3/g$), for pores with a diameter larger than 7.5 nm. The test is performed on a mass of 0.3 g pellets. Mercury, a non-wetting liquid, is forced to enter the pores at a set pressure. The measurement is performed in a pressure range between 0.012 MPa and 200 MPa, starting with the lowest pressures. For low pressures, an equipment Porosimeter Pascal 140 (supplier: Thermo Scientific) is used, for high pressures, an equipment Porosimeter Pascal 240 (supplier: Thermo Scientific) is used.

Preferably, the compacted pellets have a load until rupture of at least 30 N, such as at least 40 N, such as at least 50 N, 60 N or at least 75 N. Preferably, the compacted pellets have a compressive strength, as measured by compression testing until rupture, of at least 1.8 $N/mm^2$, such as at least 2.0 $N/mm^2$ or 4.0 $N/mm^2$. The inventors have discovered that pellets having a load until rupture of at least 40 N and/or a compressive strength of at least 1.8 $N/mm^2$ provide sufficient mechanical strength to withstand handling, transport and distribution with a highly reduced degree of damaged pellets.

The load until rupture, and corresponding compressive strength, is measured by means of compression testing, in particular crush testing, until rupture, using a high quality digital particle strength tester YHKC-2A. A spheroidal/lens-shaped pellet is placed on a first plate with its two largest dimensions (preferably length and width) parallel to the plane of the first plate and its third dimension (preferably the thickness) perpendicular to the plane of the first plate. The first plate is positioned parallel to the plane of the floor. Another plate, parallel to said first plate, is pressed onto the pellet with a predetermined force. The applied force is increased until fraction or rupture of the pellet occurs. The load until rupture is defined as the force applied by the test equipment to the pellet under testing at the moment of rupture of the pellet.

The compressive strength of the pellet in term of pressure ($N/mm^2$) is defined as the maximal force applied by the second plate to the pellet until fraction or rupture of the pellet divided by the average projected surface of the tested pellet. The average projected surface is calculated according to formula (I), wherein x and y are the two largest dimensions of the pellet, i.e. the dimensions that are positioned parallel to the plane of the first plate upon testing (preferably length and width).

$$Average\ projected\ surface = \pi * \frac{x}{2} * \frac{y}{2} \qquad\qquad (I)$$

The compressive strength in the present invention is measured on pellets having an average dimension between the lowest dimension that provides pellets that are not fractured, and the highest dimension that provides single pellets. For example, for pellets having an average diameter (i.e. D50 value of the particle size distribution (PSD)) around 4 mm, the compressive strength is tested on pellets having dimensions between 3 and 5 mm. For pellets having an average diameter (i.e. D50 value) around 5.5 mm, the compressive strength is tested on pellets having dimensions between 5 mm and 6 mm. This ensures measurement on well-shaped pellets and allows comparison of the compressive strength values (in N/mm$^2$) and of the load until rupture (in N). The compressive strength and the load until rupture is the average value of the compressive strength and the load until rupture of 15 to 30 pellets, preferably 15 to 20 pellets, more preferably 20 to 30 pellets, taken at random from a batch of pellets and tested individually.

The inventors have discovered that compacted pellets having a spheroidal/lens-shaped shape may even further reduce the risk of clogging and of blockage of the equipment. Spheroidal/lens-shaped pellets have a reduced number of sharp edges compared to pellets having random shapes. Said sharp edges may break off during handling of said pellets. A reduced number of sharp edges may reduce the quantity of powder and particles having undersized dimensions, and may thus reduce said clogging.

Preferably, when used in precision farming, in particular in soil conditioning such as soil liming, the pellets have a neutralization value of at least 70 equivalent CaO according to EN12945, such as at least 75 equivalent CaO, 80 equivalent CaO, 85 equivalent CaO, 90 equivalent CaO, or 95 equivalent CaO.

Preferably, when used in precision farming, in particular in soil conditioning such as soil liming, the pellets, for example uncoated pellets (i.e. pellets without any additional coating), have a dispersibility of at least 70% at 315 $\mu$m in water, such as at least 75%, 80%, 85%, 87%, 90%, 92%, or 95% at 315 $\mu$m in water. The dispersibility is measured on the pellets according to the method defined in the standard EN15704, adapted to be applied for oxide-based products instead of carbonate products.

A further important characteristic of products for use in precision farming, in particular in soil liming, is the handling performance and the dispersion performance to the field. An improved handling performance may ensure an easier filling of equipment and transportation of the pellets from the equipment reservoir to the distribution part of the equipment, e.g. a distribution disk that is rotating, with a reduction in loss of material due to crushing and breaking (less generation of fines and dust).

An improved dispersion performance allows to spread the required quantity of product in a more precise way on the field, reducing the quantity of pellets needed to be dispersed to obtain a sufficient quantity of liming products, e.g. deacidifying products, per unit of soil surface area. The dispersion performance can be characterized by means of the projection distance, in particular the projection distance distribution, and the projection angle, in particular the projection angle distribution.

The quality of the dispersion performance is influenced by the projection angle distribution, the average and the maximal projection distance, the robustness of the dispersion and the coefficient of variation for a predetermined projection distance.

The projection angle represents the angle at which the pellets are projected by the dispersion equipment, i.e. dispersed on the field. A narrow projection angle distribution indicates a dispersion of the pellets in a more precise way to the field.

The projection distance is a measurement for the width of the area of the field that can be covered by pellets in a single passage of the distribution equipment with only one distribution disk. An increased average and maximal projection distance allows to cover a larger surface area in a single passage.

The average projection distance is the weighted average of the projection distance distribution. The projection distance distribution provides the weight fraction of the total captured mass of pellets per projection distance, and is measured as explained below by using compartments of 0.5 m.

The maximal projection distance is the maximal distance to which the pellets are dispersed upon testing as explained below, and is a value for a set projection angle, since the projection angle is a set value in the test method.

The working dispersion/spreading width is defined as the distance between two adjacent passages when driving back and forth on the field with the spreader. The working dispersion/spreading width is a value that is influenced on one hand by the parameters at which the distribution equipment is working, on the distribution equipment characteristics, such as the type and size of the distribution disk, and on the other hand by the geometry, orientation and slope of the field as well.

The preset projection distance is the projection distance set to the distribution equipment used on the field, and is larger than 0 m and equal to or lower than the maximal projection distance for the parameters at which the distribution equipment is working, such as rotational speed of the distribution disk.

The robustness of the dispersion is a measurement for the uniformity of coverage of the field's surface area in a single passage on the field. A robust dispersion to the soil has a projection distance dispersion profile close to a triangular distribution profile, wherein the projection distance dispersion profile represents the weight fraction of the total captured mass that is, during testing, collected per 0.5 m length interval in radial direction, at a set projection angle.

The projection angle and the projection distance are measured using a method and equipment as described in NBN EN 13739-1:2011 and NBN EN 13739-2:2011.

The equipment used for the measurement of the projection angle is a lab-scale version of a fertilizer and nutrient distribution equipment (supplier: Irstea) onto which a collector is placed. The collector is divided in compartments of each 15°, as measured from the middle point of the equipment in an angular direction. 1 kg to 2 kg of pellets are fed to the distribution equipment, which supplies the pellets to the distribution disk under a fixed angle and at a constant flow. The distribution disk rotates at a preset velocity. In the light of the present invention, the rotational speed of the distribution disk is varied between 600 rpm and 1000 rpm. Such a rotational speed represents a real rotational speed used in agriculture on large-scale devices, in particular for precision farming. The collector collects the projected, dispersed pellets and provides information on the weight fraction of the total captured mass that is projected at each angle.

A narrower projection angle distribution indicates a more precise orientation of the pellets upon dispersion. A lower average projection angle indicates a lower loss of energy in the distribution equipment, in particular in the rotating distribution disk of the distribution equipment, and a lower energy loss indicates a more efficient dispersion or projection of the pellets to the field's surface area.

The projection distance is measured by means of an equipment that is a lab-scale version of a fertilizer and nutrient distribution equipment (supplier: Irstea, equipment described in for example EP 1 610 112 B1) onto which a collector is placed. The collector extends in a radial direction from the middle point of the equipment, and is divided in compartments of 0.5 m long. The projection angle for the test is determined and set in the equipment. 1 kg to 2 kg of pellets are fed to the distribution equipment, which supplies the pellets to the distribution disk under the set projection angle and at a constant flow. The distribution disk rotates at a preset velocity. In the light of the present invention, the rotational speed of the distribution disk is varied between 600 rpm and 1000 rpm. The collector collects the dispersed pellets and provides information on the weight fraction of the total captured mass that is projected in radial direction, under the set projection angle, at each compartment of the collector. These weight fractions provide the projection distance distribution at the set projection angle, and allow to calculate the average projection distance.

By repeating the projection distance measurement for every projection angle, a 3D-representation of the dispersion of the pellets could be obtained, presenting in the X-Y-plane the surface area covered in angular and radial direction, and on the Z-axis the weight fraction of the total captured mass at each point in the X-Y-plane. Alternatively, a 3D-representation can be obtained by extrapolating the projection distance data obtained for a single, set, projection angle, wherein the extrapolation is performed using a model. The 3D-representation of the pellet dispersion visualizes the dispersion of the pellets as measured by using a combination of the projection angle measurement and the projection distance measurement. The 3D-representation can also be presented in 2D, using a color scale to present the data of the Z-axis (weight fractions).

A large (maximal) projection distance allows also to supply pellets to a larger working dispersion/spreading width of the field upon a single passage of the distribution equipment. For example, for a projection distance of 10m, a working dispersion/spreading width up to 20 m is covered in a single passage. An improved projection distance of 20 m allows to cover a working dispersion/spreading width up to 40 m in a single passage. Hence, the number of passages needed to disperse the required quantity of pellets to the field may be reduced.

Preferably, the pellets have an average projection distance of at least 15 m for rotation speeds of the distribution disk between 600 rpm and 1000 rpm, such as at least 16 m or 17 m. Preferably, the pellets have an average projection distance of at least 15 m, such as 16 m or 17 m, for a distribution disk rotation speed of 600 rpm. Preferably, the pellets have an average projection distance of at least 16 m, such as 18 m or 20 m, for a distribution disk rotation speed of 800 rpm. Preferably, the pellets have an average projection distance of at least 18 m, such as 20 m or 22 m, for a distribution disk rotation speed of 1000 rpm.

The applicants have surprisingly discovered that for the pellets of the invention, an increased average projection distance is obtained compared to state of the art products. The applicants have further discovered that the dispersion has an improved homogeneity compared to state of the art products. Hence, the number of passages needed to cover uniformly a field is reduced. Distribution at the same speed in combination with a reduced number of field passages reduces the total time needed to distribute the required quantities of pellets to a field, which clearly is an economical advantage. Further, these improvements are realized when using standard precision farming equipment, excluding the need for specialized equipment.

Alternatively, when the dispersion of the pellets to the field requires maintaining a working dispersion/spreading width, and thus a preset projection distance, that is also used to disperse other products to the field, and/or that is limited by the field's geometry, orientation and slope, and this requires a preset projection distance lower than the (maximal) projection distance reachable for a preset rotational speed of the rotating disk of the distribution equipment, the rotational speed of the rotating distribution disk can be reduced. A reduced rotation speed of the distribution disk may reduce the impact force on the pellets, resulting in reduced damage to the pellets upon feeding to the distribution disk. The pellets according to the invention reach surprisingly improved (average) projection distances that are similar to those of fertilizers and nutrients, contrary to products of the state of the art.

Further indications for the homogeneity and the uniformity of the dispersion to the field in real life situations, are the robustness of the dispersion and the degree of unevenness of transverse dispersion, expressed and evaluated by means of the coefficient of variation.

An optimized, robust dispersion allows in two passages of the distribution equipment, wherein the second passage is shifted width-wise to the left or right of the first passage over a distance equal to the working dispersion/spreading width already used in the field, to obtain a (close to) 100% coverage of the field, wherein (almost) 100% of the quantity of pellets for optimal soil liming is distributed to every surface area of the field. The result is thus a dispersion that is more precise over an increased surface area in a single passage, and especially in a double passage wherein the second passage is shifted width-wise to the left or right of the first passage over a distance equal to the working dispersion/spreading width already used in the field, of the distribution equipment, hence, reducing the total number of passages since distribution to the entire field surface is obtained more precisely. Other advantages are, without being limited thereto, the possibility to use standard precision farming equipment, and a reduction of areas having too little or too much pellets, resulting in an improvement in the overall soil liming.

A robust dispersion is obtained when the projection distance distribution profile is close to a triangular profile. In a triangular profile the weight fraction of the total captured mass increases linearly up to a projection distance equal to half of the preset projection distance, and decreases linearly from half the preset projection distance up to the preset projection distance. By performing a second passage on the field, wherein the second passage is shifted width-wise to the left or right of the first passage over a distance equal to half of the preset projection distance, it is possible to reach a (close to) 100% coverage of the field, wherein (almost) 100% of the quantity of pellets for optimal soil liming is dispersed to every surface area of the field.

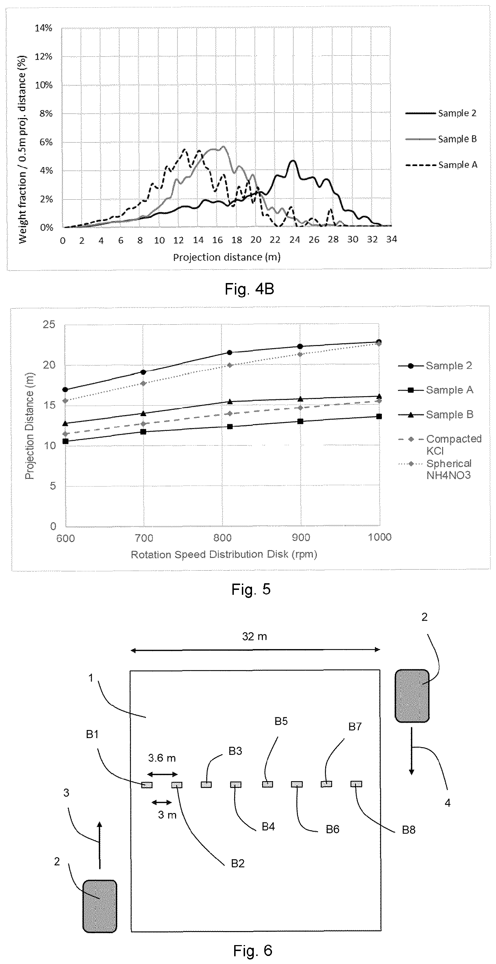

The dispersion performance can further be evaluated by performing a dispersion test in real conditions on the field. The schematic test set-up on the field is presented in Fig. 6. The soil liming agent is dispersed by means of a Rauch disperser axis 30.1 mechanic equipped with 2 disks (model S6) on a tractor 2. The disperser's parameters can be set, in particular the dispersion/spreading width (and thus the preset projection distance) and the rotational speed of the disk.

The tractor makes a first passage in one direction 3 and then makes a second passage 4 parallel to the first passage but at a distance from the first passage equal to the set working dispersion/spreading width, wherein the second passage is performed in the direction 4 opposite to the direction 3 of the first passage. In other words, one back- and-forth passage is performed, wherein the return passage is shifted parallel to the first passage over a distance equal to the set working dispersion/spreading width. This shifting is done to ensure an overlap of both passages.

A SULKY SU209440 overlap auto-control kit is used to collect the dispersed granules. The kit comprises 8 boxes B1, B2, B3, B4, B5, B6, B7, and B8. Each box has a length of 0.6 m and a width of 0.4 m (surface area of 0.24 $m^2$). The 8 boxes are positioned at an equal distance from each other, for example every 3 m, perpendicular to the direction of movement of the tractor 2, over the set working dispersion/spreading width.

After the dispersion of the pellets, as described above, the collected mass of soil liming agent in each box is weighted and the weight fraction is calculated in relation to the total captured mass of pellets. The evaluation of the dispersion performance is done by focusing on the center of overlapped area of 32 m wide, in particular the area from Box B3 to Box B6, where the variation is known to be the most critical.

The degree of unevenness of transverse dispersion is a measurement for the dispersion performance on the field, and is expressed by the coefficient of variation (CV). The coefficient of variation (unit: percentage) is calculated according to the method described in NBN EN 13739-1:2011 and NBN EN 13739-2:2011, for a predetermined, preset, projection distance (and thus a set dispersion/spreading width). A low coefficient of variation, preferably equal to or less than 15%, more preferably equal to or less than 10%, represents a very high level of uniformity.

The CV is the ratio of the standard deviation s to the average weight $\overline{X}$, as expressed by formula II:

$$CV = \frac{s}{\overline{X}} \times 100 \qquad (II)$$

The standard deviation s is calculated based on the weight xi of the collected soil liming agent (in grams) of every box separately, wherein i may be from 1 to 8, preferably from 3 to 6 (when the evaluation is done by focusing on the center of overlapped area). For example, x3 is the weight collected in Box B3. Preferably, only Boxes B3 to B6 are taken into account and the standard deviation s is calculated according to formula III:

$$s = \sqrt{\frac{1}{3}\sum_{i=3}^{6}(xi - \bar{X})^2} \qquad \text{(III)}$$

The average weight $\bar{X}$ is the average weight of collected soil liming agent (in grams) of the boxes under evaluation. Preferably, only Boxes B3 to B6 are taken into account and the average weight $\bar{X}$ is calculated according to formula IV:

$$\bar{X} = \frac{(x3+x4+x5+x6)}{4} \qquad \text{(IV)}$$

The spreading ability can be evaluated by taking in account the projection angle distribution and the projection distance distribution and by optimization of the working dispersion/spreading width while keeping a coefficient of variation lower than 15%, preferably lower than 10%. The spreading ability is expressed as the distribution/spreading width (in meter) which indicates the maximum working width possible whilst keeping a uniform spread. The spreading ability calculation can be performed by using an existing spread model, for example the model from CEMIB using 1 to 1 axis parameters inputs (for projection angle and spreading width), and for a specific spreader, for example a RAUCH spreader. The calculation may also be performed for different types of distribution disks. The CEMIB model has been developed by the CEMAGREF (Centre national du machinisme agricole du Génie Rural, des Eaux et des Forêts), currently named IRSTEA, and is a global tool for spreader developments, such as spreaders of fertilizers, using 3D spread pattern knowledge. The CEMIB model is considered to have several advantages over the older test standard according to EN 13739. A RAUCH spreader is a spreader manufactured by the company RAUCH.

Preferably, the working dispersion/spreading width of the compacted spheroidal pellets upon dispersion to the soil, wherein the dispersion has a coefficient of variation lower than 10%, is at least 30 m, preferably at least 32 m, at least 35 m, at least 38 m, or at least 40 m.

The present invention further comprises a precision farming method. The precision farming method advantageously comprises the steps of:

- measuring the soil composition and/or properties, and the level of soil acidity of the soil to be treated,
- mapping the measurements in a database,
- determining the difference between the measured values and the targeted values, in relation to the plants and/or crops to be grown, and/or optionally any nutrients and/or any fertilizers to be dispersed to the soil,
- determining the dispersion profile of the compacted spheroidal/lens-shaped pellets to be dispersed to each position, and
- dispersing the compacted spheroidal/lens-shaped pellets to the soil according to the determined dispersion profile.

The step of measuring the soil provides information on the soil properties, composition and/or characteristics, and the level of soil acidity prior to working the soil, for each position on the field. The level of acidity can be measured by measuring the pH value. Alternatively, the level of acidity of the soil at each position can be measured by means of the saturation rate, i.e. the ratio of exchangeable cations compared to the soil capacity. Yet another method to measure the level of acidity of the soil is by means of the hydrolytic acidity, aiming to measure the total exchangeable acidity by combining the apparent and the linked acidity.

Preferably, the measurements are mapped in a database to store the information on the soil's composition and/or properties and the level of soil acidity in combination with the respective position on the field. The position on the field may be registered by means of GPS coordinates. Preferably, the database is a database using GPS coordinates.

The step of determining the difference between the measured values and the targeted values comprises determination of the targeted values - composition and/or properties, and level of soil acidity - in function of the plants and/or crops to be grown, and/or nutrients and/or fertilizers that will be dispersed.

The dispersion profile can be determined from the determined difference between measured values (actual values) and targeted values (theoretical values). Preferably the dispersion profile comprises information on the quantity of compacted spheroidal/lens-shaped pellets to be dispersed to each position. Preferably, the method comprises the step of determining the required quantity of neutralization value to be applied to each position based on the difference between the targeted values and the measured values at the respective positions.

Preferably, the dispersion profile comprises a preset projection distance, i.e. the maximal projection distance that can be achieved by the distribution equipment used to disperse the compacted pellets to the field while keeping a coefficient of variation lower than 15%, preferably 10%, taking into account the characteristics of the dispersion equipment (type and speed of projection disk), and the characteristics of the field (geometry, orientation, slope). The dispersion profile is determined for a given rotational speed of the distribution disk or distribution disks of the distribution equipment.

The dispersion profile may further including information on the quantity of the compacted spheroidal/lens-shaped pellets to be dispersed to each area of the field.

Preferably, the compacted, spheroidal/lens-shaped pellets are dispersed in a dispersion profile that linearly increases up to a projection distance of half of the preset projection distance, and then linearly decreases until the preset projection distance is reached.

The precision farming method of the invention may further comprise the step of evaluating the dispersion profile and/or the dispersed quantities of the compacted spheroidal/lens-shaped pellets. This evaluation can be performed by one or more further measurements of the soil composition and/or properties, and of the level of soil acidity, the second measurement being performed after the dispersion step.

The dispersion step may be conducted via a distribution disk of a distribution equipment, wherein the distribution disk is preferably rotating at a rotational speed of the distribution disk of the distribution equipment between 400 rpm and 1500 rpm, such as between 500 rpm and 1250 rpm, preferably between 600 rpm and 1000 rpm, or between 700 rpm and 900 rpm, such as 810 rpm.

**Examples**

*Example 1*

Table 1 represents the relevant test data for four examples according to the present invention, used in particular for precision farming, as well as for two comparative examples, also in particular used for precision farming. All samples are made starting from a powder having the same composition, comprising a calcium/magnesium source comprising primarily CaO and a limited amount of a magnesium source comprising primarily MgO. The particles in the powder mixture have a D95 equal to or lower than 2 mm.

Samples 1 and 2 are both pellets having an average size (D50 value of the PSD) of approximately 4 mm, wherein Sample 2 comprises calcium stearate (CaSt - 0.15 wt%) as additive to the powder.

Samples 3 and 4 are both pellets having an average size of approximately 5.5 mm (D50 value of the PSD), wherein Sample 4 comprises calcium stearate (CaSt - 0.15 wt%) as additive to the powder.

The comparative examples are produced from pebbles coming from the kiln, followed by a screening step to separate undersized and oversized pellets from pellets having a pre-selected size. The pre-selected size is from 2 mm to 8 mm for Sample A and from 2 mm to 4 mm for Sample B. The pellets of Samples A and B do not comprise calcium stearate (CaSt) as additive.

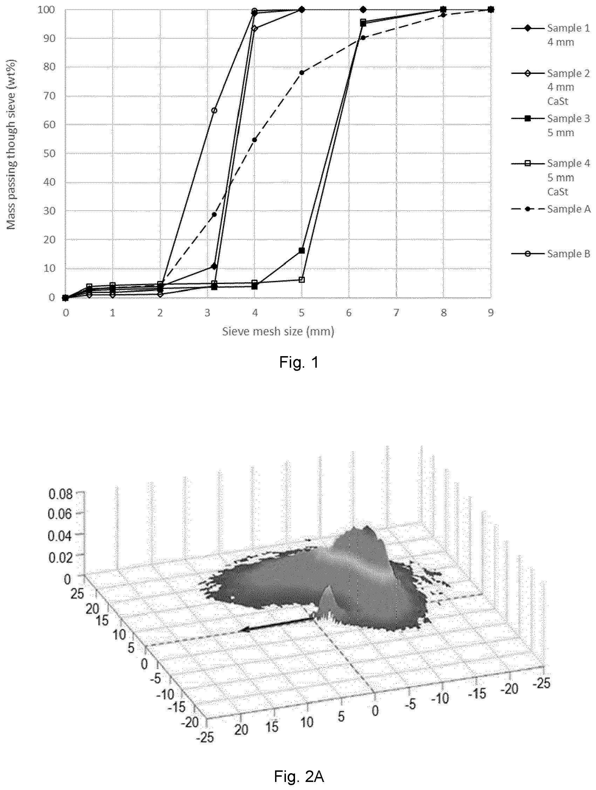

The particle size distribution reported in Table 1 is measured by sieve analysis after the screening step. Fig. 1 shows the cumulative particle size distribution (PSD) in graphical form. The D10 and D90 value are calculated from the cumulative PSD. All Samples 1 to 4, according to the invention, have a D10/D90 ratio that is at least 0.73, while the D10/D90 ratio of the comparative samples A and B is lower than 0.60. The samples according to the invention have thus a significantly narrower PSD.

It is further clear from Table 1 that the load until rupture is for all four samples of the invention at least 80 N, up to even 110 N, while the load until rupture of the comparative samples is at most 27.5 N. The compressive strength, measured by compression testing until rupture, is for all four samples of the invention at least 1.87 N/mm$^2$, up to even 6.26 N/mm$^2$, while the compressive strength of the comparative samples is at most 1.74 N/mm$^2$, and goes as low as 0.62 N/mm$^2$.

It is further clear from Table 1 that the examples for use in precision farming according to the present invention have similar neutralization values than the comparative examples A and B. They further have a dispersibility equal to or higher than both comparative examples.

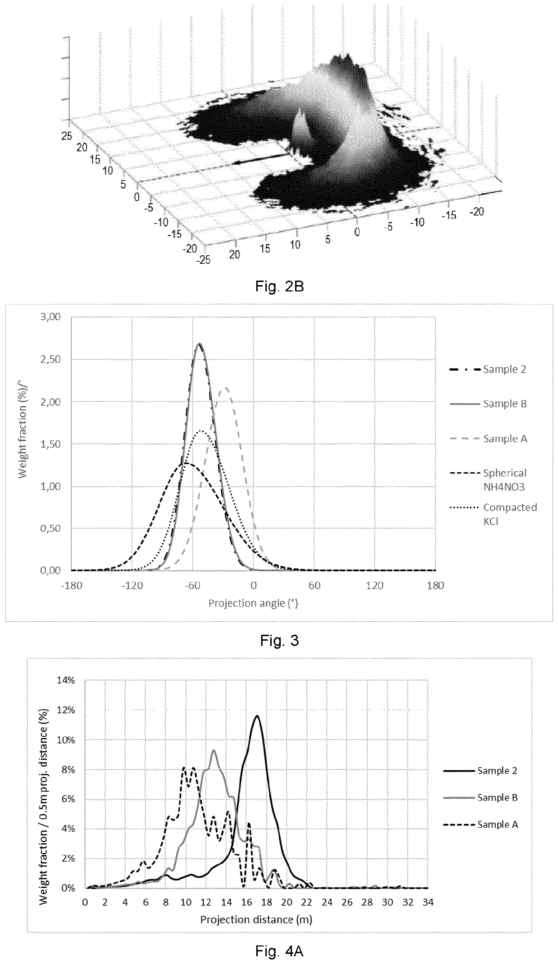

Fig. 2A shows an example of a 3D-representation representing the results of a dispersion test using a single rotating disk at the distribution equipment to disperse pellets to a field. The X-Y-plane shows the surface area of the field that is covered. There is a radial dispersion, represented by the projection angle distribution, and a spatial dispersion, represented by the projection distance. The Z-axis shows the weight fractions measured in each spot. To obtain the weight fractions, the covered surface is divided in zones of 15° radially and 1 m deep spatially. The mass of pellets in each zone is weighted and the fraction is obtained by dividing the mass by the total captured mass. The black arrow indicates the direction of movement of the distribution equipment should the distribution be done on a real field using full-scale precision farming distribution equipment instead of the test set-up. In that case the equipment often has two rotating disks, leading to a 3D-representation that comprises the 3D-representation of Fig. 2A and the mirrored 3D-representation of Fig. 2A (see Fig. 2B).

Fig. 3 shows the projection angle distribution for Sample 2 according to the invention, reference samples A and B of Table 1, spherical $NH_4NO_3$ (fertilizer) and non-spherical potassium chloride (KCl) (nutrient). The projection angle distribution is measured and calculated according to the test set-up and the procedure as explained above. The rotational speed or velocity at which the test is performed is 810 rpm. It is clear from Fig. 3 that the pellets of the present invention (Sample 2) show a narrower angle distribution than sample A, the nutrient and the fertilizer. For Sample 2 almost 100% of the pellets is distributed at a projection angle between -100° and 0° (a range of 100°), whereas for sample A the distribution is between -90° and 30° (a range of 120°).

Fig. 4A shows the projection distance distribution for Sample 2, Sample A and Sample B of Table 1, for a distribution disk rotational speed of 600 rpm. Fig. 4B shows the projection distance distribution for Sample 2, Sample A and Sample B of Table 1, for a distribution disk rotational speed of 1000 rpm. Both projection distance distribution measurements are performed, for every sample individually, at the average projection angle of that sample The X-axis shows the projection distance (m), which is defined as the middle point between the minimal radial distance and the maximal radial distance of each compartment from the middle point of the collector of the test equipment for the projection distance, as explained above. The Y-axis shows the weight fraction (%) of the total captured mass of pellets.

It is clear from Fig. 4A and Fig. 4B that the pellets of the invention (Sample 2) have a larger average projection distance and a larger maximal projection distance than the reference samples. The dispersion of the pellets is also more robust, i.e. the projection distance distribution profile is very close to the targeted triangular profile, and the increase and decrease of the weight fractions is more linear, showing a more homogeneous dispersion of the pellets to the field.

Fig. 5 shows the average projection distance for Sample 2 according to the invention, reference samples A and B of Table 1, spherical $NH_4NO_3$ (fertilizer) and non-spherical potassium chloride (KCl) (nutrient). The projection distance is measured as explained above at the average projection angle for a given rotational speed, for rotational speeds of the distribution disk from 600 rpm up to 1000 rpm. It is clear from Fig. 5 that the pellets of Sample 2 show significantly larger average projection distances than the pellets of the comparative examples (Samples A and B) and the nutrient KCl, and are the only calcium-based pellets having average projection distances in the range of - and even higher than - the spherical fertilizer $NH_4NO_3$. At 600 rpm, the average distribution distance of Sample 2 is 60% higher than that of Sample A, 32.50% higher than that of Sample B, and 47% higher than that of KCl. The average projection distance increases with the rotation speed of the distribution disk.

From Fig. 3 to Fig. 5 it is clear that the pellets of the present invention have improved dispersion properties in terms of a narrow projection angle distribution and an increased projection distance (average and maximal), compared to the reference samples of the state of the art.

Based on the projection angle distribution and the projection distance distribution, the dispersion/spreading width has been calculated for a RAUCH spreader, using three types of distribution disks - S6, S8 and S10. The spread model used is the CEMIB model with 1 to 1 axis parameter inputs (for projection angle and spreading width). The results for Sample 2 and Samples A and B are presented in Table 2. It is clear from Table 2 that the sample according to the invention (Sample 2) has for all types of distribution disks a dispersion/spreading width that is larger than the dispersion/spreading width of the reference samples (Samples A and B), and thus has a better spreading ability.

Table 2

|  | Disk S6 | Disk S8 | Disk S10 |
|---|---|---|---|
| **Sample 2** | 44 m | 48 m | 50 m |
| **Sample A** | 34 m | 37 m | 39 m |
| **Sample B** | 29 m | 31 m | 32 m |

*Example 2*

A comparative test of the dispersion performance was performed in real conditions on the field, according to the set-up of Fig. 6, and as explained above. The test was performed at the following ambient conditions: wind speed of 2.7 m/s, a temperature of 18 °C and an air humidity of 65%. The wind speed, temperature and air humidity are measured using tools known in the field, such as a Testo 400 equipped with different probes, for example an anemometer and one or more humidity probes. The disperser's parameters are set for the dispersion of a commercially available fertilizer, meaning a working dispersion/spreading width of 32 m and a rotational speed of the disk of 540 rpm. A SULKY SU209440 overlap auto-control kit is used to collect the dispersed granules. The kit comprises 8 boxes having each a length of 0.6 m and a width of 0.4 m (surface area of 0.24 $m^2$). The 8 boxes are positioned at an equal distance of m, perpendicular to the direction of movement of the tractor 2, over 32 m.

The samples that have been tested are Sample 2 and Sample A of Table 1. The test was performed on the same field, using the same working dispersion/spreading width of 32 m and the same rotational speed of the disk of 540 rpm for all samples.

When focusing on the critical zone of overlap, only Boxes B3 to B6 are taken into account. Table 3 presents the average weight collected per box, the standard deviation, and the coefficient of variation, all calculated according to the Formulae II, III, and IV. It is clear from Table 3 that the pellets of the invention have significantly improved dispersion performance, as measured in real conditions on the field. The average weight collected in the critical zone is for the pellets of the invention (Sample 2) almost 50% higher than the reference soil liming agent (Sample A), whereas the standard deviation is significantly lower, resulting in a coefficient of variation that is more than 30% lower than that of Sample A. NBN EN 13739-1 prescribes that for a good dispersion on the field the evenness of the transversal distribution when driving to and fro, shall be such that the calculated value of the coefficient of variation (CV) must not exceed 15%. The CV of Sample 2 is well below 15%, even significantly lower than 10%, and indicated thus a very low unevenness of dispersion in real conditions.

Table 3

|  | $\overline{X}$ | s | CV |
|---|---|---|---|
| **Sample 2** | 9.30 g | 0.55 g | 5.9 % |
| **Sample A** | 6.29 g | 2.39 g | 38.1 % |

Table 1

| Characteristic | Unit | Pellets of invention | | | | Comparative samples | |
|---|---|---|---|---|---|---|---|
| | | Sample 1 4 mm | Sample 2 4 mm CaSt | Sample 3 5 mm | Sample 4 5 mm CaSt | Sample A | Sample B |
| Granule density (Hg picnometry) | g/cm$^3$ | 1.971 | 2.22 | 1.70 | 1.60 | 1.52 | 1.58 |
| Load until rupture | N | 80 | 100 | 100 | 110 | 27.5 | 27.5 |
| Compressive strength | N/mm2 | 5.07 | 6.26 | 1.87 | 2.18 | 0.62 | 1.74 |
| Mercury porosity ($V_{Hg}$ intrusion) | cm$^3$/g | 0.174 | 0.189 | 0.190 | 0.190 | 0.322 | 0.300 |
| Neutralization value (EN12945) | Equivalent CaO | 95.1 | 95.3 | 96.16 | 93.62 | 92.98 | 96.87 |
| Dispersibility (EN15704) | % at 315 $\mu$m | 90.0 | 80.0 | 95.6 | 98.1 | 86.9 | 89.4 |

(continued)

| Characteristic | | Unit | Pellets of invention | | | | Comparative samples | |
|---|---|---|---|---|---|---|---|---|
| | | | Sample 1 4 mm | Sample 2 4 mm CaSt | Sample 3 5 mm | Sample 4 5 mm CaSt | Sample A | Sample B |
| PSD after screening (Sieve analysis) | 0 $\mu$m | wt% passing the sieve with mesh width x $\mu$m | 0 | 0 | 0 | 0 | 0 | 0 |
| | 500 $\mu$m | | 2.93 | 1.0 | 2.56 | 3.86 | 2.93 | 1.86 |
| | 1000 $\mu$m | | 3.27 | 1.1 | 2.73 | 4.17 | 3.25 | 1.90 |
| | 2000 $\mu$m | | 3.82 | 1.3 | 3.19 | 4.59 | 4.12 | 2.81 |
| | 3150 $\mu$m | | 10.82 | 3.9 | 3.48 | 4.92 | 28.80 | 64.97 |
| | 4000 $\mu$m | | 98.74 | 93.5 | 3.75 | 5.01 | 54.66 | 99.73 |
| | 5000 $\mu$m | | 100.00 | 100.00 | 16.08 | 6.04 | 78.00 | 100.00 |
| | 6300 $\mu$m | | 100.00 | 100.00 | 95.11 | 95.87 | 90.31 | 100.00 |
| | 8000 $\mu$m | | 100.00 | 100.00 | 100.00 | 100.00 | 98.08 | 100.00 |
| | 10000 $\mu$m | | 100.00 | 100.00 | 100.00 | 100.00 | 100.00 | 100.00 |
| D10 (Calculated from Sieve analysis) | | mm | 3.01 | 3.21 | 4.51 | 5.06 | 2.27 | 2.13 |
| D50 (Calculated from Sieve analysis) | | mm | 3.53 | 3.59 | 5.56 | 5.64 | 3.85 | 2.87 |
| D90 (Calculated from Sieve analysis) | | mm | 3.92 | 3.97 | 6.22 | 6.22 | 6.27 | 3.76 |
| D10/D90 ratio | | No unit | 0.77 | 0.81 | 0.73 | 0.81 | 0.36 | 0.57 |
| Shape ratio ($d_{min}/d_{max}$) | | No unit | 0.66 | 0.66 | 0.56 | 0.61 | 0.55 | 0.54 |

**Claims**

1. Use of compacted spheroidal pellets in precision farming, the pellets comprising a calcium source and optionally a magnesium source, wherein said pellets have:

   - an average size lower than 10 mm, measured by sieve analysis, and
   - a granule density equal to or higher than 1.60 g/cm$^3$, preferably equal to or higher than 1.70 g/cm$^3$, measured by mercury picnometry,

   **characterized by** said calcium source comprising at least CaO, said magnesium source comprising at least MgO, wherein the pellets comprise at least 60 wt%, preferably 70 wt% of said CaO and/or said MgO, based on the total weight of the pellets.

2. Use according to Claim 1, wherein the pellets have a particle size distribution having a D10/D90 ratio equal to or higher than 0.60, wherein the D10 value and the D90 value are obtained by means of sieve analysis.

3. Use according to any preceding claim, wherein the pellets have a mercury porosity equal to or lower than 0.3 cm$^3$/g, preferably equal to or lower than 0.2 cm$^3$/g, measured by mercury intrusion on pores with a diameter larger than 7.5 nm.

4. Use according to any preceding claim, wherein the pellets have a load until rupture of at least 40 N, preferably at least 75 N, measured by compression testing until rupture.

5. Use according to any preceding claim, wherein the pellets have a neutralization value of at least 70 equivalent CaO according to EN12945, preferably at least 75 equivalent CaO, 80 equivalent CaO, 85 equivalent CaO, 90 equivalent CaO, or 95 equivalent CaO.

6. Use according to any preceding claim, wherein the pellets have a dispersibility of at least 70% at 315 $\mu$m in water, according to the method defined in EN15704.

7. Use according to any preceding claim, wherein the pellets are a soil liming compound.

8. Precision farming method comprising the steps of:

   - measuring the soil composition and the level of soil acidity,
   - mapping the measurements in a database,
   - determining the difference between the measured values - soil composition and level of soil acidity - and the targeted values, in relation to the plants and crops and/or any nutrients and/or any fertilizers that will be dispersed to the soil,
   - determining a dispersion profile of the compacted spheroidal pellets of Claims 1 to 7 to be dispersed to each position, and
   - dispersing the compacted spheroidal pellets of claims 1 to 7 to the soil according to the determined dispersion profile,

   wherein the compacted spheroidal pellets comprise a calcium source and optionally a magnesium source, said calcium source comprising at least CaO, said magnesium source comprising at least MgO, wherein the pellets comprise at least 60 wt%, preferably 70 wt% of said CaO and/or said MgO, based on the total weight of the pellets, and wherein the compacted spheroidal pellets have an average size lower than 10 mm, measured by sieve analysis, and a granule density equal to or higher than 1.60 g/cm$^3$, preferably equal to or higher than 1.70 g/cm$^3$, measured by mercury picnometry.

9. Method according to Claim 8, wherein the compacted spheroidal pellets are dispersed to the soil according to a triangular dispersion profile linearly increasing up to a projection distance of half of the preset projection distance, and then linearly decreasing until the preset projection distance is reached, and wherein the coefficient of variation for a preset projection distance, measured according to NBN EN 13739-1:2011 and NBN EN 13739-2:2011, is equal to or less than 15%, preferably equal to or less than 10%.

10. Method according to Claim 9, wherein the working dispersion/spreading width of the compacted spheroidal pellets upon dispersion to the soil is at least 30 m, preferably at least 35 m, or at least 40 m, as calculated using the CEMIB model with 1 to 1 axis parameter inputs for a RAUCH spreader.

**Patentansprüche**

1. Verwendung von kompaktierten kugelförmigen Pellets in der Präzisionslandwirtschaft, wobei die Pellets eine Calciumquelle und optional eine Magnesiumquelle umfassen, wobei die Pellets Folgendes aufweisen:

   - eine durchschnittliche Größe von weniger als 10 mm, gemessen durch eine Siebanalyse, und
   - eine Granulatdichte gleich wie oder höher als 1,60 g/cm$^3$, vorzugsweise gleich wie oder höher als 1,70 g/cm$^3$, gemessen durch Quecksilber-Pycnometrie,

   **dadurch gekennzeichnet, dass** die Calciumquelle mindestens CaO umfasst, wobei die Magnesiumquelle mindestens MgO umfasst, wobei die Pellets mindestens 60 Gew%, vorzugsweise 70 Gew% des CaO und/oder des MgO umfassen, basierend auf dem Gesamtgewicht der Pellets.

2. Verwendung nach Anspruch 1, wobei die Pellets eine Partikelgrößenverteilung mit einem Verhältnis D10/D90 gleich wie oder höher als 0,60 aufweisen, wobei der D10-Wert und der D90-Wert mit Hilfe der Siebanalyse erhalten werden.

3. Verwendung nach einem vorhergehenden Anspruch, wobei die Pellets eine Quecksilberporosität gleich wie oder kleiner als 0,3 $cm^3/g$, vorzugsweise gleich wie oder kleiner als 0,2 $cm^3/g$ aufweisen, gemessen durch Quecksilber-Intrusion auf Poren mit einem Durchmesser grösser als 7,5 nm.

4. Verwendung nach einem vorhergehenden Anspruch, wobei die Pellets eine Bruchlast von mindestens 40 N, vorzugsweise mindestens 75 N, gemessen durch Bruchkompressionstest, aufweisen.

5. Verwendung nach einem vorhergehenden Anspruch, wobei die Pellets einen Neutralisationswert von mindestens 70 Äquivalenten CaO gemäß EN12945 aufweisen, vorzugsweise mindestens 75 Äquivalenten CaO, 80 Äquivalenten CaO, 85 Äquivalenten CaO, 90 Äquivalenten CaO oder 95 Äquivalenten CaO.

6. Verwendung nach einem vorhergehenden Anspruch, wobei die Pellets eine Dispergierbarkeit von mindestens 70 % bei 315 $\mu$m in Wasser gemäß dem Verfahren, definiert in EN15704, aufweisen.

7. Verwendung nach einem vorhergehenden Anspruch, wobei die Pellets eine Bodenkalkungsverbindung sind.

8. Präzisionslandwirtschaft, umfassend die folgenden Schritte:

- Messen der Bodenzusammensetzung und des Niveaus des Bodensäuregehalts,
- Abbilden der Messungen in einer Datenbank,
- Bestimmen der Differenz zwischen den gemessenen Werten - Bodenzusammensetzung und Niveau des Bodensäuregehalts - und den Zielwerten mit Bezug auf die Pflanzen und Feldfrüchte und/oder Nährstoffe und/oder Dünger, die auf den Boden verteilt werden,
- Bestimmen eines Verteilungsprofils der kompaktierten sphärischen Pellets nach Anspruch 1 bis 7, die auf jeder Position verteilt werden sollen, und
- Verteilen der kompaktierten sphärischen Pellets nach Anspruch 1 bis 7 auf den Boden gemäß dem bestimmten Verteilungsprofil,

wobei die kompaktierten kugelförmigen Pellets eine Calciumquelle und optional eine Magnesiumquelle umfassen, wobei die Calciumquelle mindestens CaO umfasst, wobei die Magnesiumquelle mindestens MgO umfasst, wobei die Pellets mindestens 60 Gew%, vorzugsweise 70 Gew% des CaO und/oder des MgO umfassen, basierend auf dem Gesamtgewicht der Pellets, und wobei die kompaktierten kugelförmigen Pellets eine durchschnittliche Größe von weniger als 10 mm, gemessen durch Siebanalyse, und eine Granulatdichte gleich wie oder höher als 1,60 $g/cm^3$ aufweisen, vorzugsweise gleich wie oder höher als 1,70 $g/cm^3$, gemessen durch Quecksilber-Pycnometrie

9. Verfahren nach Anspruch 8, wobei die kompaktierten kugelförmigen Pellets gemäß einem dreieckigen Verteilungsprofil auf dem Boden verteilt sind, das sich linear bis zu einem Projektionsabstand der Hälfte des voreingestellten Projektionsabstands erhöht und dann linear verringert, bis der voreingestellte Projektionsabstand erreicht ist, und wobei der Variationskoeffizient für einen voreingestellten Projektionsabstand, gemessen gemäß NBN EN 13739-1:2011 und NBN EN 13739-2:2011, gleich wie oder weniger als 15 %, vorzugsweise gleich wie oder weniger als 10 % ist.

10. Verfahren nach Anspruch 9, wobei die Arbeitsverteilungs-/Ausbreitungsbreite der kompaktierten kugelförmigen Pellets bei Verteilung auf den Boden mindestens 30 m, vorzugsweise mindestens 35 m oder mindestens 40 m ist, wie unter Verwendung des CEMIB-Models mit 1 zu 1 Achsenparametereingaben für RAUCH-Streuer berechnet.

**Revendications**

1. Utilisation de granulés sphéroïdaux compactés en agriculture de précision, les granulés comprenant une source de calcium et éventuellement une source de magnésium, lesdits granulés ayant :

- une taille moyenne inférieure à 10 mm, mesurée par analyse par tamisage, et
- une masse volumique de granulés égale ou supérieure à 1,60 $g/cm^3$, de préférence égale ou supérieure à 1,70 $g/cm^3$, mesurée par picnométrie au mercure,

**caractérisée en ce que** ladite source de calcium comprend au moins CaO, ladite source de magnésium comprenant au moins MgO, les granulés comprenant au moins 60 % en poids, de préférence 70 % en poids dudit CaO et/ou dudit MgO, sur la base du poids total des granulés.

2. Utilisation selon la revendication 1, **caractérisée en ce que** les granulés ont une distribution granulométrique ayant un rapport D10/D90 égal ou supérieur à 0,60, la valeur D10 et la valeur D90 étant obtenues par analyse par tamisage.

3. Utilisation selon l'une quelconque des revendications précédentes, **caractérisée en ce que** les granulés ont une porosité au mercure égale ou inférieure à 0,3 cm$^3$/g, de préférence égale ou inférieure à 0,2 cm$^3$/g, mesurée par intrusion de mercure sur des pores d'un diamètre supérieur à 7,5 nm.

4. Utilisation selon l'une quelconque des revendications précédentes, **caractérisée en ce que** les granulés ont une charge à la rupture d'au moins 40 N, de préférence d'au moins 75 N, mesurée par essai de compression à la rupture.

5. Utilisation selon l'une quelconque des revendications précédentes, **caractérisée en ce que** les granulés ont une valeur de neutralisation d'au moins 70 équivalents de CaO selon EN12945, de préférence d'au moins 75 équivalents de CaO, 80 équivalents de CaO, 85 équivalents de CaO, 90 équivalents de CaO ou 95 équivalents de CaO.

6. Utilisation selon l'une quelconque des revendications précédentes, **caractérisée en ce que** les granulés ont une dispersibilité d'au moins 70 % à 315 $\mu$m dans l'eau, selon la méthode définie dans EN 15704.

7. Utilisation selon l'une quelconque des revendications précédentes, **caractérisée en ce que** les granulés sont un composé de chaulage du sol.

8. Procédé d'agriculture de précision comprenant les étapes de :

   - mesurer la composition du sol et le niveau d'acidité du sol,
   - cartographier les mesures dans une base de données,
   - déterminer la différence entre les valeurs mesurées - composition du sol et niveau d'acidité du sol - et les valeurs ciblées, par rapport aux plantes et cultures et/ou aux éventuels nutriments et/ou aux éventuels engrais qui seront dispersés sur le sol,
   - déterminer un profil de dispersion des granulés sphéroïdaux compactés selon les revendications 1 à 7 à disperser à chaque position, et
   - disperser les granulés sphéroïdaux compactés selon les revendications 1 à 7 sur le sol conformément au profil de dispersion déterminé,

   **caractérisé en ce que** les granulés sphéroïdaux compactés comprennent une source de calcium et éventuellement une source de magnésium, ladite source de calcium comprenant au moins CaO, ladite source de magnésium comprenant au moins MgO, **en ce que** les granulés comprennent au moins 60 % en poids, de préférence 70 % en poids dudit CaO et/ ou dudit MgO, sur la base du poids total des granulés, et **en ce que** les granulés sphéroïdaux compactés ont une taille moyenne inférieure à 10 mm, mesurée par analyse par tamisage, et une masse volumique de granulés égale ou supérieure à 1,60 g/cm$^3$, de préférence égale ou supérieure à 1,70 g/cm$^3$, mesurée par picnométrie au mercure.

9. Procédé selon la revendication 8, **caractérisé en ce que** les granulés sphéroïdaux compactés sont dispersés sur le sol selon un profil de dispersion triangulaire augmentant linéairement jusqu'à une distance de projection égale à la moitié de la distance de projection prédéfinie, puis diminuant linéairement jusqu'à ce que la distance de projection prédéfinie soit atteinte, et **en ce que** le coefficient de variation pour une distance de projection prédéfinie, mesuré selon NBN EN 13739-1:2011 et NBN EN 13739-2:2011, est égal ou inférieur à 15 %, de préférence égal ou inférieur à 10 %.

10. Procédé selon la revendication 9, **caractérisé en ce que** la largeur de travail de dispersion/épandage des granulés sphéroïdaux compactés lors de la dispersion sur le sol est d'au moins 30 m, de préférence d'au moins 35 m, ou d'au moins 40 m, telle que calculée au moyen du modèle CEMIB avec des entrées de paramètre d'axe 1 à 1 pour un épandeur RAUCH.

Fig. 1

Fig. 2A

Fig. 2B

Fig. 3

Fig. 4A

Fig. 4B

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030097863 A
- WO 2017163246 A
- US 2016207843 A
- EP 1610112 B1

### Non-patent literature cited in the description

- **EILISH BURKE TEAGASC.** Precision lime making a difference. *Today's Farm,* September 2017, vol. 24
- **JONJAK ; A.KADAMCHUK ; V.IWORTMANN ; C.SSHAPIRO, C.A.** Spatial Variability in Crop, Soil and Natural Resources. *Oral,* 2010
- **B. E. MILLS ; B. WADE BRORSEN ; D. B. ARNALL.** The profitability of variable rate lime in wheat. *Precis. Agric,* June 2019
- Improved mercury picnometry for measuring accurate volumes of solid materials. **S YAMAGISHI ; Y TAKAHASHI.** catalogue of PMI - Porous Material Inc.,. IOPScience
- Reporting Physisorption Data for Gas/Solid Systems, with Special Reference to the Determination of Surface Area and Porosity. *Pure & Appl. Chem,* 1985, vol. 57 (4), 603-619